# EUROPEAN PATENT SPECIFICATION

(11) **EP 4 383 108 B1**
(45) Date of publication and mention of the grant of the patent: **20.08.2025**
(21) Application number: 23212827.2
(22) Date of filing: 28.11.2023
(51) Int. Cl.: G06F 21/57, G06F 21/64, G06F 13/38

(54) **CONTROL APPARATUS AND ROBOT SYSTEM**
STEUERUNGSVORRICHTUNG UND ROBOTERSYSTEM
APPAREIL DE COMMANDE ET SYSTÈME DE ROBOT

(30) Priority: 07.12.2022 JP 2022195806
(43) Date of publication of application: 12.06.2024
(73) Proprietor: Seiko Epson Corporation, Tokyo 160-8801 (JP)
(72) Inventor: OGASAWARA, Naoki, Suwa-shi, Nagano, 392-8502 (JP)
(74) Representative: MERH-IP Matias Erny Reichl Hoffmann Patentanwälte PartG mbB

(56) References cited:
- US-A1- 2015 149 783
- US-A1- 2015 186 150
- US-A1- 2019 108 347
- US-A1- 2021 350 027

## Description

The present application is based on, and claims priority from JP Application Serial Number 2022-195806, filed December 7,2022.

### BACKGROUND

### 1. Technical Field

The present disclosure relates to a control apparatus and a robot system.

### 2. Related Art

JP-A-2007-086920 discloses an electronic apparatus configured to activate the electronic apparatus by reading in and executing a program stored in external memory means. According to the electronic apparatus, even when a boot program stored in a read-only memory (ROM) or the ROM itself is defective, the electronic apparatus can be activated. Thereby, time and effort for repairing including replacement of the ROM may be saved.

Additional prior art is represented by documents US2015/186150A1, US2015/149783A1, US2021/350027A1 and US2019/108347A1.

An electronic apparatus may include a main board at least for activation and a sub-board for functionality expansion. When the electronic apparatus including the plurality of boards is activated, in related art, a program necessary for activation is once read out from external memory means into a memory of the main board, and then, a processor of the main board executes processing of loading programs for the respective boards. The loading processing is performed after the programs for the respective boards are read in a work area of the memory of the main board. Accordingly, the work area of the main board is temporarily reduced and the speed of the loading processing and the speed of the activation processing of the main board become lower. As a result, a problem that time is taken for activation of the electronic apparatus arises.

### SUMMARY

A control apparatus according to an application example of the present disclosure includes a first board having a first memory unit containing a first work area and a first coupling area and a first processing unit executing a first program stored in the first work area, a second board having a second memory unit containing a second work area and a second processing unit executing a second program stored in the second work area, a communication interface linking the first coupling area and the second work area, and a memory medium storing a compressed file containing the first program and the second program, wherein the compressed file is read out from the memory medium into the first work area, the first program contained in the compressed file is loaded in the first work area, the second program contained in the compressed file is loaded in the first coupling area, and the second program is transferred from the first coupling area to the second work area via the communication interface.

A robot system according to an application example of the present disclosure includes a robot including a robot arm, and the control apparatus according to the application example of the present disclosure controlling a motion of the robot.

### BRIEF DESCRIPTION OF THE DRAWINGS

FIG. 1 is a conceptual diagram showing a robot system according to an embodiment.
FIG. 2 is a block diagram showing a hardware configuration of a control apparatus shown in FIG. 1.
FIG. 3 is a functional block diagram showing functions of the control apparatus shown in FIG. 2.
FIG. 4 shows a file structure of overall firmware stored in a memory card in FIG. 2.
FIG. 5 shows a memory map of the memory card shown in FIG. 2 and a memory map of a main board shown in FIG. 2.
FIG. 6 is a flowchart for explanation of an activation method for the control apparatus.
FIG. 7 is a conceptual diagram for explanation of the activation method shown in FIG. 6.
FIG. 8 is a conceptual diagram for explanation of the activation method shown in FIG. 6.
FIG. 9 is a conceptual diagram for explanation of the activation method shown in FIG. 6.
FIG. 10 is a conceptual diagram for explanation of the activation method shown in FIG. 6.

### DESCRIPTION OF EMBODIMENTS

As below, a control apparatus and a robot system of the present disclosure will be explained in detail based on preferred embodiments shown in the accompanying drawings.

### 1. Robot System

First, a robot system according to an embodiment will be explained.

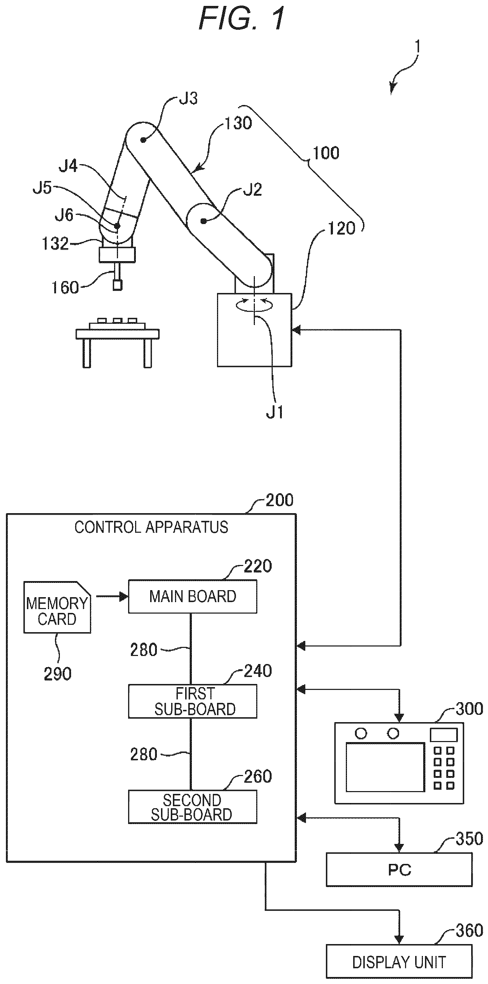

FIG. 1 is a conceptual diagram showing a robot system 1 according to the embodiment.

The robot system 1 shown in FIG. 1 includes a robot 100, a control apparatus 200 (a control apparatus according to the embodiment), a teach pendant 300, a personal computer 350, and a display unit 360.

### 1.1. Robot

The robot 100 shown in FIG. 1 includes a base 120 and a robot arm 130. The robot arm 130 includes six arms coupled sequentially from the base 120 side and six joints J1 to J6 coupling between the base 120 and the arm and between the arms. Of the six joints J1 to J6 shown in FIG. 1, the three joints J2, J3, J5 are bending joints and the other three joints J1, J4, J6 are twisting joints. Each of the joints J1 to J6 includes a motor as a drive source and an encoder for detecting a rotation amount of the motor, i.e., position information of the motor (not shown). In the specification, the motor and the encoder are combined as a servo motor. A control point showing a position of the robot arm 130 as an object to be controlled is set at a distal end of the robot arm 130.

Note that, in the embodiment, a six-axis vertical articulated robot is exemplified as the robot 100, however, the number of axes is not particularly limited, but may be more or less than six. Or, the robot 100 may be a horizontal articulated robot, a dual-arm robot, or a robot having another form.

An arm end 132 is provided at the distal end of the robot arm 130, i.e., an end of the robot arm 130 opposite to the base 120. An end effector 160 is attached to the arm end 132. The end effector 160 is detachably attached. The end effector 160 includes e.g., a hand gripping a workpiece and a suction tool suctioning a work piece.

### 1.2. Control Apparatus

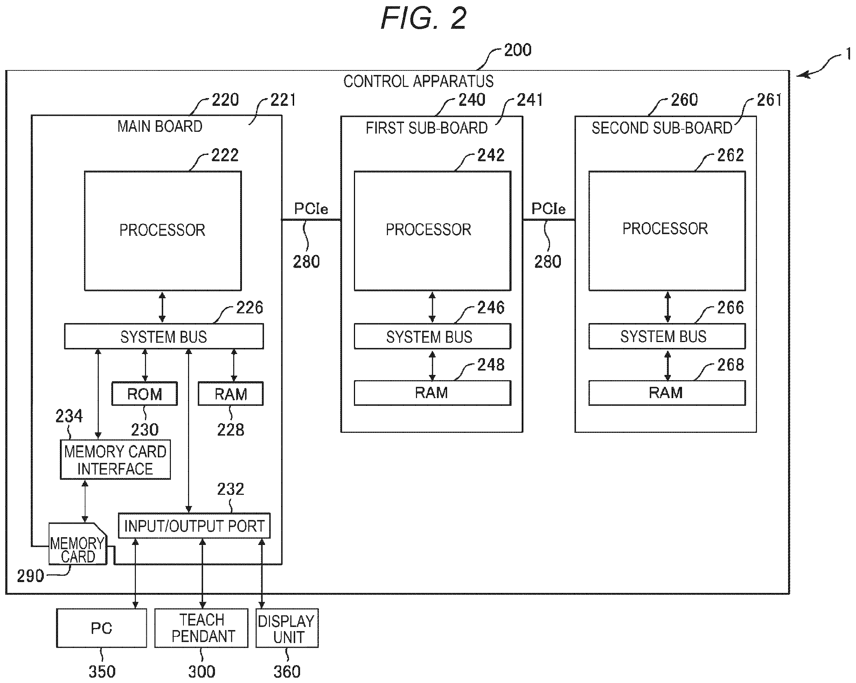

FIG. 2 is a block diagram showing a hardware configuration of the control apparatus 200 shown in FIG. 1.

The control apparatus 200 shown in FIG. 2 includes a main board 220 (first board), a first sub-board 240 (second board), and a second sub-board 260 (third board). These respective boards can communicate with one another via a communication interface 280.

### 1.2.1. Main Board

The main board 220 shown in FIG. 2 includes a printed wiring board 221, a processor 222 (first processing unit), a system bus 226, a RAM 228 (first memory unit), a ROM 230, an input/output port 232, a memory card interface 234, and a memory card 290 (memory medium). The RAM is abbreviated for Random Access Memory and the ROM is abbreviated for Read-Only Memory.

The printed wiring board 221 includes an insulated substrate and wires and electrically couples attached electronic components.

The processor 222 realizes various functions by executing a first program loaded in the RAM 228. The processor 222 includes e.g., a microprocessor, a core, and a processor circuit having a cache memory etc. (not shown). The microprocessor and the core include e.g., CPUs (Central Processing Units) and DSPs (Digital Signal Processors). The processor circuit includes e.g., a SoC (System on a Chip) and a SiP (System in a Package). Or, a part or all of the processor 222 may be formed by a device such as an ASIC (Application Specific Integrated Circuit) or an FPGA (Field Programmable Gate Array).

The system bus 226 is a transmission route coupling between the processor 222 and the RAM 228 and ROM 230 for enabling mutual communication.

The RAM 228 temporarily stores the first program to be executed by the processor 222, read-out data, etc. The RAM 228 includes e.g., a DRAM (Dynamic Random Access Memory).

The ROM 230 stores a boot program to be executed by the processor 222 etc. The ROM 230 includes e.g., an EEPROM (registered trademark) (Electrically Erasable Programmable Read-Only Memory) and a Flash ROM (Flash Read-Only Memory). Note that the ROM 230 may be an external memory.

The input/output port 232 is an interface for communication between the respective units of the main board 220 and another apparatus. The input/output port 232 includes e.g., a digital input/output port such as a USB (Universal Serial Bus), an Ethernet (registered trademark) port, and a picture output port.

The memory card interface 234 is an interface for the memory card 290 (memory medium) to be detachable. The memory card interface 234 reads out a file stored in the attached memory card 290 and writes a file in the attached memory card 290. A compressed file 400, which will be described later, is stored in the memory card 290.

The memory card 290 includes e.g., various memory media such as an SD card and a USB memory. Preferably, the memory media are data-writable and non-volatile. Thereby, for example, the memory medium may be easily replaced by a memory card 290 storing a new compressed file 400, and the new compressed file 400 may be introduced into the main board 220 easily in a short time.

Note that the memory card 290 is detachable and external data may be easily read in the main board 220. On the other hand, the memory card 290 may be undetachable and, in this case, may be fixed to the control apparatus 200 as a mere memory medium. Further, data may be downloaded in the memory medium via a network or the like.

### 1.2.2. First Sub-board

The first sub-board 240 shown in FIG. 2 includes a printed wiring board 241, a processor 242 (second processing unit), a system bus 246, and a RAM 248 (second memory unit).

The printed wiring board 241 includes an insulated substrate and wires and electrically couples attached electronic components.

The processor 242 realizes various functions by executing a second program loaded in the RAM 248. The processor 242 includes e.g., a microprocessor, a core, and a processor circuit having a cache memory etc. (not shown). Or, a part or all of the processor 242 may be formed by a device such as an ASIC or an FPGA.

The system bus 246 enables communication between the processor 242 and the RAM 248. The RAM 248 temporarily stores the second program to be executed by the processor 242, read-out data, etc.

### 1.2.3. Second Sub-board

The second sub-board 260 shown in FIG. 2 includes a printed wiring board 261, a processor 262 (third processing unit), a system bus 266, and a RAM 268 (third memory unit).

The printed wiring board 261 includes an insulated substrate and wires and electrically couples attached electronic components.

The processor 262 realizes various functions by executing a third program loaded in the RAM 268. The processor 262 includes e.g., a microprocessor, a core, and a processor circuit having a cache memory etc. (not shown). Or, a part or all of the processor 262 may be formed by a device such as an ASIC or an FPGA.

The system bus 266 enables communication between the processor 262 and the RAM 268. The RAM 268 temporarily stores the third program to be executed by the processor 262, read-out data, etc.

### 1.2.4. Communication Interface

The communication interface 280 is a transmission route for transmission of programs, data, etc., e.g., a serial communication interface such as a PCI or PCI-Express (registered trademark) or the like. In the following description, the PCI-Express is also referred to as "PCle".

As above, the hardware configuration example of the control apparatus 200 is explained, however, the hardware configuration is not limited to that. For example, the second sub-board 260 may be omitted or another sub-board may be added.

### 1.2.5. Functional Units

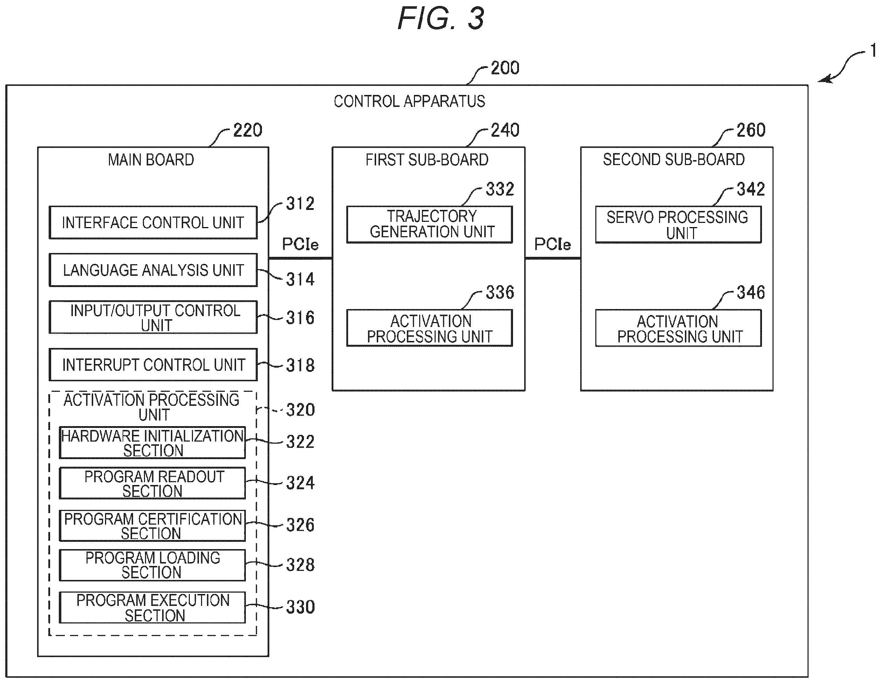

FIG. 3 is a functional block diagram showing functions of the control apparatus 200 shown in FIG. 2.

### 1.2.5.1. Functional Units of Main Board

The main board 220 shown in FIG. 3 has an interface control unit 312, a language analysis unit 314, an input/output control unit 316, an interrupt control unit 318, and an activation processing unit 320 as functional units. The functions of these respective functional units are realized by e.g., the processor 222 executing the first program stored in the RAM 228 of the main board 220 and the boot program stored in the ROM 230 depending on the hardware configuration of the main board 220.

For example, the interface control unit 312 controls communication among the main board 220, the first sub-board 240, and the second sub-board 260.

The language analysis unit 314 reads and analyzes a robot language describing a motion of the robot 100. The unit receives a motion program of the robot 100 from the personal computer 350 via the input/output control unit 316, which will be described later, analyzes the motion program, and acquires target position information of the robot arm 130. The target position information is information on a target position as a target location to which the control point of the robot arm 130 is moved, e.g., data representing coordinates of the target position.

The input/output control unit 316 controls coupling to the teach pendant 300, the personal computer 350, and another peripheral device coupled to the main board 220.

The interrupt control unit 318 controls processing of branching from a program being executed to another program (interrupt processing).

The activation processing unit 320 has a function of activating the main board 220. The activation processing unit 320 has a hardware initialization section 322, a program readout section 324, a program certification section 326, a program loading section 328, and a program execution section 330.

The hardware initialization section 322 initializes at least the main board 220 and the communication interface 280.

The program readout section 324 reads out a file stored in the memory card 290. Then, the program readout section 324 copies the read-out file in the RAM 228.

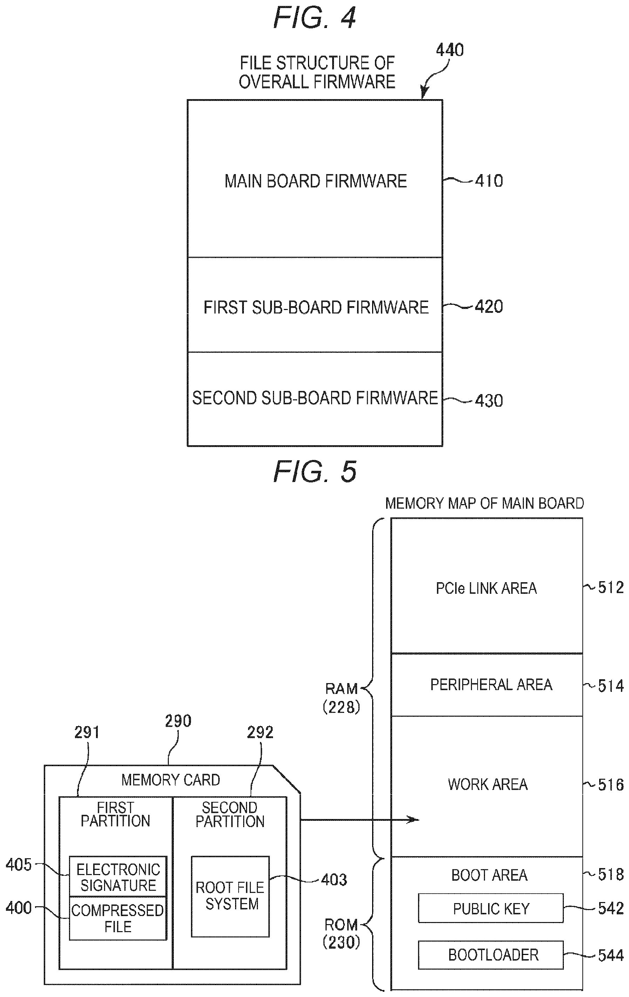

FIG. 4 shows a file structure of overall firmware 440 stored in the memory card 290 in FIG. 2. As shown in FIG. 4, the overall firmware 440 has a main board firmware 410 (first program), a first sub-board firmware 420 (second program), and a second sub-board firmware 430 (third program). Each firmware is a program containing e.g., an OS (operating system), an application, data, etc. The overall firmware 440 is generally in a binary format, but may be in a text format.

FIG. 5 shows a memory map of the memory card 290 shown in FIG. 2 and a memory map of the main board 220 shown in FIG. 2. Note that the memory map shown in FIG. 5 is an example and the memory map is not limited to that.

As shown in FIG. 5, the RAM 228 of the main board 220 contains memory spaces including a PCIe link area 512 (first coupling area), a peripheral area 514, a work area 516 (first work area), and a boot area 518. Of the areas, the boot area 518 stores a public key 542 and a bootloader 544.

Further, as shown in FIG. 5, the memory space of the memory card 290 is divided in a first partition 291 and a second partition 292. The first partition 291 stores the compressed file 400 and an electronic signature 405. The second partition 292 stores a root file system 403.

The compressed file 400, the electronic signature 405, and the root file system 403 shown in FIG. 5 are copied in the work area 516 in the activation processing of the control apparatus 200, which will be described later.

The program certification section 326 certifies the compressed file 400 read out in the RAM 228. The certification refers to verification of integrity and authenticity of the compressed file 400. In the specification, as a result of the verification, a status that the integrity and the authenticity are confirmed is referred to as "certified".

The program loading section 328 loads the main board firmware 410 of the certified compressed file 400 in the work area 516 of the RAM 228 of the main board 220. Further, the program loading section 328 loads the first sub-board firmware 420 and the second sub-board firmware 430 of the certified compressed file 400 in the PCIe link area 512 of the RAM 228.

The program execution section 330 executes the certified main board firmware 410. Thereby, the main board 220 is activated.

Note that these functional units of the main board 220 are examples and may be partially omitted or partially provided on another board, and another functional unit may be added.

### 1.2.5.2. Functional Units of First Sub-board

The first sub-board 240 shown in FIG. 3 has a trajectory generation unit 332 and an activation processing unit 336 as functional units. The functions of these respective functional units are realized by e.g., the processor 242 executing the second program stored in the RAM 248 of the first sub-board 240 depending on the hardware configuration of the first sub-board 240.

The trajectory generation unit 332 generates a trajectory when the robot arm 130 is driven based on the target position information received from the main board 220.

The activation processing unit 336 executes the certified first sub-board firmware 420. Thereby, the first sub-board 240 is activated.

Note that these functional units of the first sub-board 240 are examples and may be partially omitted or partially provided in another board, and another functional unit may be added.

### 1.2.5.3. Functional Units of Second Sub-board

The second sub-board 260 shown in FIG. 3 has a servo processing unit 342 and an activation processing unit 346 as functional units. The functions of these respective functional units are realized by e.g., the processor 262 executing the second program stored in the RAM 248 of the second sub-board 260 depending on the hardware configuration of the second sub-board 260.

The servo processing unit 342 controls an operation of the servo motor of the robot 100.

The activation processing unit 346 executes the certified second sub-board firmware 430. Thereby, the second sub-board 260 is activated.

Note that these functional units of the second sub-board 260 are examples and may be partially omitted or partially provided in another board, and another functional unit may be added.

### 1.3. Activation Method for Control Apparatus

Next, an activation method for the control apparatus 200 shown in FIG. 3 is explained.

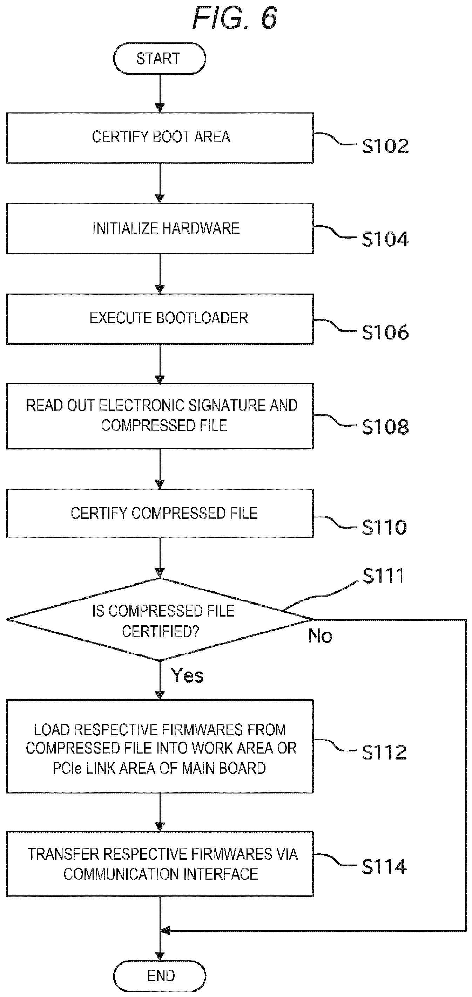

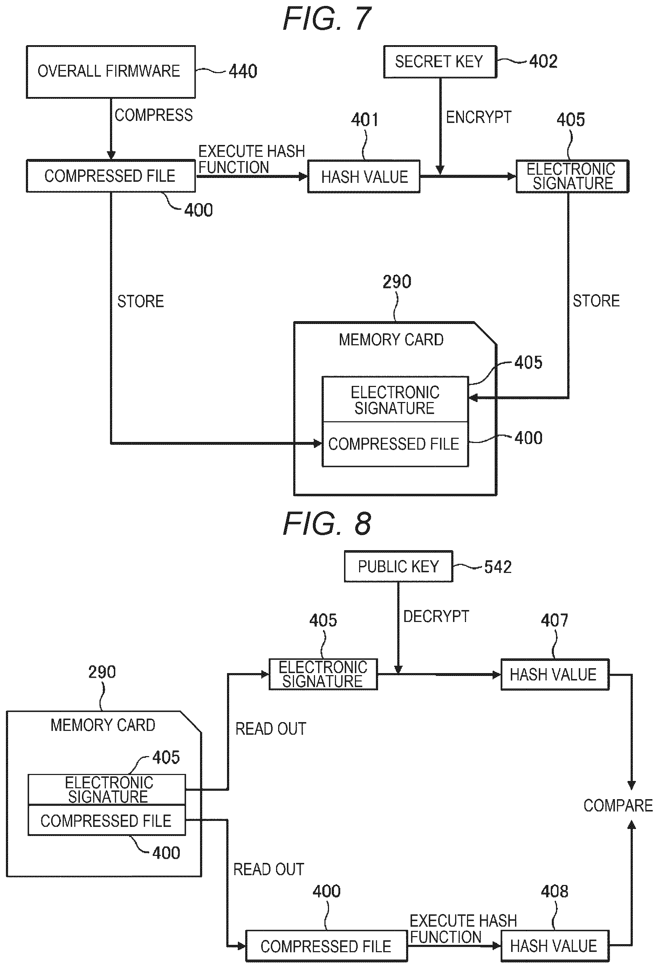

FIG. 6 is a flowchart for explanation of the activation method for the control apparatus 200. FIGS. 7 to 10 are conceptual diagrams for explanation of the activation method shown in FIG. 6.

The activation method for the control apparatus 200 shown in FIG. 6 has step S102 to step S114.

After the control apparatus 200 is turned on, the process goes to step S102. At step S102, the program readout section 324 of the activation processing unit 320 performs processing of reading out the public key 542 and the bootloader 544 stored in the boot area 518 shown in FIG. 5. Then, the program certification section 326 performs processing of certifying the public key 542 and the bootloader 544. The certification processing is processing of verifying integrity and authenticity of the public key 542 and the bootloader 544.

At step S104, the hardware initialization section 322 initializes the main board 220 and the communication interface 280.

At step S106, the program execution section 330 executes the bootloader 544. Thereby, preparation for execution of the firmwares is made.

At step S108, the program readout section 324 reads out the compressed file 400, the electronic signature 405, and the root file system 403 stored in the memory card 290 in the work area 516.

The electronic signature 405 is a digital signature associated with the compressed file 400. The compressed file 400 is a file formed by data compression of the overall firmware 440. The root file system 403 is a root file system of each firm ware.

In FIG. 7, generation processing of the electronic signature 405 is explained.

First, the overall firmware 440 is data-compressed and the compressed file 400 is obtained. The compressed file 400 is stored in the memory card 290 without change. The overall firmware 440 is compressed and stored, and thereby, data capacity of the memory card 290 may be reduced and time taken for reading out and loading of the stored compressed file may be reduced.

On the other hand, a hash function is executed on the compressed file 400. Thereby, a hash value 401 is obtained. The hash function is a function of returning output data (hash value) having a fixed length from data having an arbitrary length and has a property of returning the same hash value from the same data. The hash function includes e.g., SHA-258, SHA-384, and SHA-512.

The obtained hash value 401 is encrypted using a secret key 402. The encryption of the hash value 401 may be performed by e.g., a certificate authority as a certification institution using the secret key 402. Thereby, the electronic signature 405 is obtained. The electronic signature 405 is stored in the memory card 290.

At step S110, the program certification section 326 certifies the compressed file 400 based on the electronic signature 405 read out in the work area 516.

In FIG. 8, the certification processing of the compressed file 400 is explained.

First, the read-out electronic signature 405 is decrypted using the public key 542. The public key 542 forms a pair with the above-described secret key 402 and is issued from the certificate authority in advance. By decryption, a hash value 407 (first hash value) is generated. On the other hand, the hash function is executed on the compressed file 400. Thereby, a hash value 408 (second hash value) is generated. Then, the hash value 407 and the hash value 408 are compared. When the values are the same, integrity and authenticity of the compressed file 400 are confirmable, and thereby, the compressed file is certified. When the values are different, integrity and authenticity of the compressed file 400 are impaired, and thereby, the compressed file is not certified.

According to the certification processing, the certification of the compressed file 400 may be achieved only by comparison between the values having fixed lengths as hash values. Accordingly, the certification may be achieved in a shorter time and that contributes to shortening of the activation time of the control apparatus 200. Further, it is preferable that the public key 542 is stored in the control apparatus 200. Thereby, the certification processing may be performed in a local environment and that contributes to further shortening of the activation time.

At step S111, whether the compressed file 400 is certified is determined. When the compressed file is certified, the process goes to step S112. When the compressed file is not certified, the flow is ended. Thereby, the control apparatus 200 may be activated only when the file is certified and secure boot is realized.

At step S112, the program loading section 328 loads the respective firmwares from the compressed file 400.

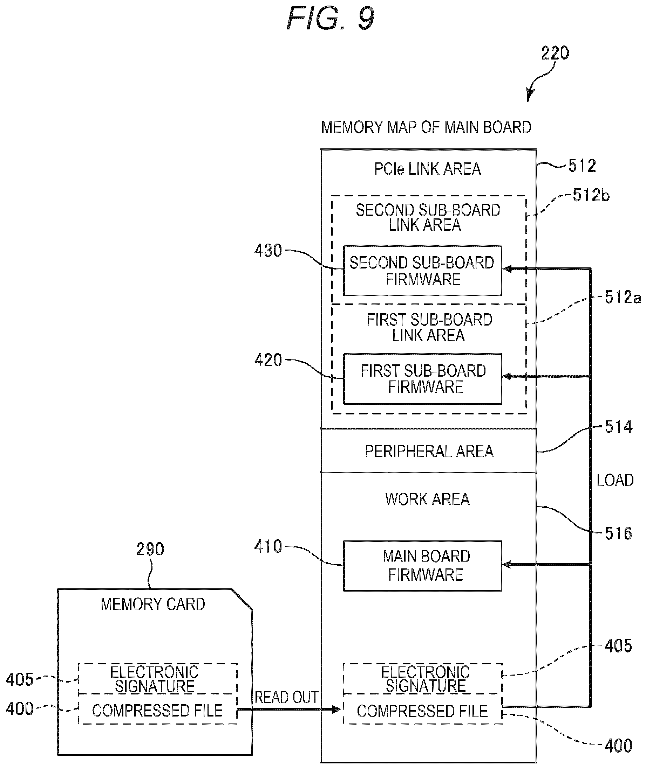

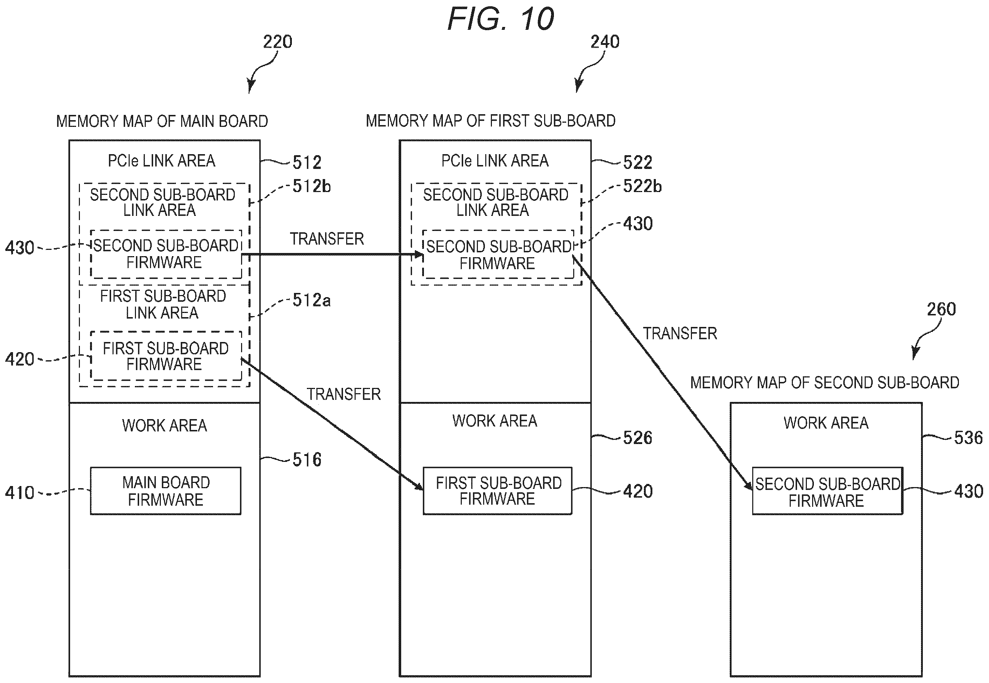

FIGS. 9 and 10 are respectively for explanation of the processing of loading the respective firmwares from the compressed file 400.

As shown in FIGS. 9 and 10, the main board 220 contains the PCIe link area 512 (first coupling area), the peripheral area 514, and the work area 516 (first work area) as the memory spaces. Of the areas, the PCIe link area 512 contains a first sub-board link area 512a and a second sub-board link area 512b. The peripheral area 514 is a memory space provided to a peripheral device coupled to the main board 220. The work area 516 is a memory space accessed by the processor 222. Note that these memory spaces are set in e.g., the RAM 228, however, may be set in another memory device. Further, the setting of the memory spaces is performed by e.g., a controller (not shown) contained in the chipset of the communication interface 280.

As shown in FIG. 10, the first sub-board 240 contains a PCIe link area 522 (second coupling area) and a work area 526 (second work area) as memory spaces. Of the areas, the PCIe link area 522 contains a second sub-board link area 522b. The work area 526 is a memory space accessed by the processor 242. Note that these memory spaces are set in e.g., the RAM 248, however, may be set in another memory device.

As shown in FIG. 10, the second sub-board 260 contains a work area 536 (third work area) as a memory space. The work area 536 is a memory space accessed by the processor 262.

The first sub-board link area 512a is linked to the work area 526 via the communication interface 280.

The second sub-board link area 512b is mutually linked to the second sub-board link area 522b and the work area 536 via the communication interface 280.

At step S112, as shown in FIG. 9, the program loading section 328 extracts the main board firmware 410 (first program) from the compressed file 400 and loads the firmware in the work area 516 of the main board 220. Further, as shown in FIG. 9, the program loading section 328 extracts the first sub-board firmware 420 (second program) from the compressed file 400 and loads the firmware in the first sub-board link area 512a contained in the PCIe link area 512 (first coupling area) of the main board 220. Furthermore, as shown in FIG. 9, the program loading section 328 extracts the second sub-board firmware 430 (third program) from the compressed file 400 and loads the firmware in the second sub-board link area 512b contained in the PCIe link area 512 of the main board 220. The loading processing is performed by e.g., the processor 222 or the controller (not shown) contained in the chipset of the communication interface 280.

Note that, when the program loading section 328 performs the above-described loading, the section may load the respective firmwares remaining in the compressed conditions or in decompressed conditions. When loaded in the compressed conditions, the firmwares may be decompressed in the respective boards.

At step S114, as shown in FIG. 10, the first sub-board firmware 420 is transferred from the first sub-board link area 512a contained in the PCIe link area 512 (first coupling area) to the work area 526 (second work area) of the first sub-board 240 via the communication interface 280.

Further, at step S114, as shown in FIG. 10, the second sub-board firmware 430 is transferred from the second sub-board link area 512b contained in the PCIe link area 512 (first coupling area) through the PCIe link area 522 (second coupling area) of the first sub-board 240 to the work area 536 (third work area) of the second sub-board 260 via the communication interface 280. The loading processing is performed by e.g., the controller (not shown) contained in the chipset of the communication interface 280. Thereby, the transfer processing may be performed with the minimized load on the processor 222.

In the above-described manner, the respective firmwares may be loaded in the respective work areas. Then, the respective firmwares are executed in the respective work areas, and thereby, the respective boards may be activated and the activation of the control apparatus 200 is completed.

As described above, not all of the compressed file 400 read out into the work area 516 of the main board 220 is loaded in the work area 516, but only the main board firmware 410 is loaded in the work area 516. On the other hand, the first sub-board firmware 420 and the second sub-board firmware 430 are loaded in the PCIe link area 512.

Then, the first sub-board firmware 420 is transferred from the PCIe link area 512 to the work area 526 of the first sub-board 240 and the second sub-board firmware 430 is transferred from the PCIe link area 512 through the PCIe link area 522 to the work area 536 of the second sub-board 260.

Thereby, the work area 516 of the main board 220 may be avoided from being occupied by the loading and the transfer of the respective firmwares. As a result, the temporal reduction of the work area 516 may be suppressed and the reduction of the processing speed of the processor 222 of the main board 220 may be suppressed. Further, in parallel to the operation of the processor 222, the respective firmwares can be transferred. Accordingly, the reduction of the operation speed of the processor 222 with the transfer of the respective firmwares may be suppressed. Therefore, the activation time of the control apparatus 200 may be shortened using the above-described activation method.

In the control apparatus 200, the system of reading out the compressed file 400 is employed, and therefore, compared to a case where an uncompressed firmware is read out, data capacity of the memory card 290 may be reduced. Thereby, the time taken to read out the firmware may be reduced.

### 2. Effects exerted by Embodiment

As described above, the control apparatus 200 (the control apparatus according to the above-described embodiment) includes the main board 220 (first board), the first sub-board 240 (second board), the communication interface 280, and the memory card 290 (memory medium) as shown in FIGS. 1 and 2.

As shown in FIGS. 2 and 10, the main board 220 has the RAM 228 (first memory area) containing the work area 516 (first work area) and the PCIe link area 512 (first coupling area) and the processor 222 (first processing unit) executing the main board firmware 410 (first program) stored in the work area 516.

The first sub-board 240 has the RAM 248 (second memory unit) containing the work area 526 (second work area) and the processor 242 (second processing unit) executing the first sub-board firmware 420 (second program) stored in the work area 526.

The communication interface 280 links the PCIe link area 512 and the work area 526.

The memory card 290 (memory medium) stores the compressed file 400 containing the main board firmware 410 and the first sub-board firmware 420.

Then, the control apparatus 200 reads out the compressed file 400 from the memory card 290 into the work area 516, loads the main board firmware 410 contained in the compressed file 400 in the work area 516, loads the first sub-board firmware 420 contained in the compressed file 400 in the PCIe link area 512, and transfers the first sub-board firmware 420 from the PCIe link area 512 to the work area 526 via the communication interface 280.

According to the configuration, the work area 516 of the main board 220 may be avoided from being occupied by the loading and the transfer of the respective firmwares. As a result, the temporal reduction of the work area 516 may be suppressed and the reduction of the processing speed of the processor 222 of the main board 220 may be suppressed. Further, in parallel to the operation of the processor 222, the respective firmwares can be transferred. Accordingly, the reduction of the operation speed of the processor 222 with the transfer of the respective firmwares may be suppressed. Therefore, according to the above-described configuration, the activation time of the control apparatus 200 may be shortened.

Further, in the above-described embodiment, the memory card 290 (memory medium) stores the electronic signature 405 associated with the compressed file 400.

It is preferable that the control apparatus 200 according to the above-described embodiment performs the certification processing of certifying the compressed file 400 based on the electronic signature 405, when the compressed file is certified in the certification processing, loads the main board firmware 410 (first program) and the first sub-board firmware 420 (second program) and, when the compressed file is not certified, does not load the main board firmware 410 and the first sub-board firmware 420.

Thereby, the secure boot of the control apparatus 200 may be realized. That is, the activation of the control apparatus 200 based on the uncertified compressed file 400 may be prevented.

Further, in the above-described embodiment, the certification processing has the processing of generating the hash value 407 (first hash value) from the electronic signature 405 using the public key 542, the processing of generating the hash value 408 (second hash value) by executing the hash function on the compressed file 400, and the processing of comparing the hash value 407 and the hash value 408.

Thereby, the certification of the compressed file 400 may be achieved only by reading out of the two files (the electronic signature 405 and the compressed file 400) from the memory card 290 and comparison between the values having fixed lengths generated from the files. Thereby, the activation time of the control apparatus 200 may be further shortened. Further, the public key 542 is stored in the control apparatus 200, and thereby, the activation time may be further shortened.

In the above-described embodiment, the communication interface 280 is the PCI-Express interface. The PCI-Express interface includes a mechanism for performing transfer processing with suppressed loads on the processors 222, 242, 262, e.g., bus master transfer. Thereby, in the processors 222, 242, 262, other processing than the transfer processing may be performed in parallel. As a result, the activation time of the control apparatus 200 may be further shortened.

In the above-described embodiment, the control apparatus 200 further includes the second sub-board 260 (third board). The second sub-board 260 has the RAM 268 (third memory unit) containing the work area 536 (third work area) and the processor 262 (third processing unit) executing the second sub-board firmware 430 (third program) stored in the work area 536.

The RAM 248 (second memory unit) further contains the PCIe link area 522 (second coupling area) and the communication interface 280 mutually links the PCIe link area 512 (first coupling area), the PCIe link area 522 (second coupling area), and the work area 536 (third work area).

The control apparatus 200 transfers the second sub-board firmware 430 from the PCIe link area 512 through the PCIe link area 522 to the work area 536 via the communication interface 280.

According to the configuration, even the control apparatus 200 having two or more expansion boards (sub-boards) may shorten the activation time. Thereby, a balance between improvements in performance and stability with function distribution and shortening of the activation time may be achieved.

The robot system 1 according to the above-described embodiment includes the robot 100 having the robot arm 130 and the control apparatus 200 (the control apparatus according to the embodiment) controlling the motion of the robot 100.

According to the configuration, the robot system 1 that may enjoy the effects exerted by the control apparatus 200 and can be activated in a shorter time may be realized.

As above, the control apparatus and the robot system of the present disclosure are explained based on the illustrated embodiments, however, the present disclosure is not limited to those.

For example, in the control apparatus and the robot system of the present disclosure, the configurations of the respective parts of the above-described embodiments may be replaced by any configurations having the same functions, or any other configuration may be added. Further, the control apparatus of the present disclosure may be used for another purpose than the control of the robot.

## Claims

1. A control apparatus comprising:
a first board having a first memory unit containing a first work area and a first coupling area and a first processing unit executing a first program stored in the first work area;
a second board having a second memory unit containing a second work area and a second processing unit executing a second program stored in the second work area;
a communication interface linking the first coupling area and the second work area; and
a memory medium storing a compressed file containing the first program and the second program, wherein
the compressed file is read out from the memory medium into the first work area,
the first program contained in the compressed file is loaded in the first work area,
the second program contained in the compressed file is loaded in the first coupling area, and
the second program is transferred from the first coupling area to the second work area via the communication interface.

2. The control apparatus according to claim 1, wherein
the memory medium stores an electronic signature associated with the compressed file,
certification processing of certifying the compressed file is performed based on the electronic signature,
when the compressed file is certified in the certification processing, the first program and the second program are loaded, and
when the compressed file is not certified in the certification processing, the first program and the second program are not loaded.

3. The control apparatus according to claim 2, wherein
the certification processing includes:
processing of generating a first hash value from the electronic signature using a public key;
processing of generating a second hash value by executing a hash function on the compressed file; and
processing of comparing the first hash value and the second hash value.

4. The control apparatus according to claim 1, wherein
the communication interface is a PCI-Express (registered trademark) interface.

5. The control apparatus according to claim 1, further comprising a third board having a third memory unit containing a third work area and a third processing unit executing a third program stored in the third work area, wherein
the second memory unit further contains a second coupling area,
the communication interface mutually links the first coupling area, the second coupling area, and the third work area, and
the third program is transferred from the first coupling area through the second coupling area to the third work area via the communication interface.

6. A robot system comprising:
a robot including a robot arm; and
the control apparatus according to claim 1 controlling a motion of the robot.

## Patentansprüche

1. Steuerungsvorrichtung, umfassend:
eine erste Platine mit einer ersten Speichereinheit, beinhaltend einen ersten Arbeitsbereich und einen ersten Kopplungsbereich, und einer ersten Verarbeitungseinheit, die ein erstes Programm ausführt, das in dem ersten Arbeitsbereich gespeichert ist,
eine zweite Platine mit einer zweiten Speichereinheit, beinhaltend einen zweiten Arbeitsbereich, und einer zweiten Verarbeitungseinheit, die ein zweites Programm ausführt, das in dem zweiten Arbeitsbereich gespeichert ist,
eine Kommunikationsschnittstelle, die den ersten Kopplungsbereich und den zweiten Arbeitsbereich verbindet; und
ein Speichermedium, das eine komprimierte Datei speichert, die das erste Programm und das zweite Programm beinhaltet, wobei
die komprimierte Datei aus dem Speichermedium in den ersten Arbeitsbereich ausgelesen wird,
das erste Programm, das in der komprimierten Datei beinhaltet ist, in den ersten Arbeitsbereich geladen wird,
das zweite Programm, das in der komprimierten Datei beinhaltet ist, in den ersten Kopplungsbereich geladen wird und
das zweite Programm über die Kommunikationsschnittstelle von dem ersten Kopplungsbereich zu dem zweiten Arbeitsbereich übertragen wird.

2. Steuerungsvorrichtung nach Anspruch 1, wobei
das Speichermedium eine elektronische Signatur speichert, die mit der komprimierten Datei verknüpft ist,
Zertifizierungsverarbeitung zum Zertifizieren der komprimierten Datei basierend auf der elektronischen Signatur durchgeführt wird,
wenn die komprimierte Datei in der Zertifizierungsverarbeitung zertifiziert wird, das erste Programm und das zweite Programm geladen werden, und
wenn die komprimierte Datei in der Zertifizierungsverarbeitung nicht zertifiziert wird, das erste Programm und das zweite Programm nicht geladen werden.

3. Steuerungsvorrichtung nach Anspruch 2, wobei
die Zertifizierungsverarbeitung enthält:
Verarbeiten zum Generieren eines ersten Hash-Werts aus der elektronischen Signatur unter Verwendung eines öffentlichen Schlüssels;
Verarbeiten zum Generieren eines zweiten Hash-Werts durch Ausführen einer Hash-Funktion an der komprimierten Datei; und
Verarbeiten zum Vergleichen des ersten Hash-Werts und des zweiten Hash-Werts.

4. Steuerungsvorrichtung nach Anspruch 1, wobei
die Kommunikationsschnittstelle eine PCI-Express (eingetragenes Warenzeichen) Schnittstelle ist.

5. Steuerungsvorrichtung nach Anspruch 1, weiter umfassend eine dritte Platine mit einer dritten Speichereinheit, beinhaltend einen dritten Arbeitsbereich, und einer dritten Verarbeitungseinheit, die ein drittes Programm ausführt, das in dem dritten Arbeitsbereich gespeichert ist, wobei
die zweite Speichereinheit weiter einen zweiten Kopplungsbereich beinhaltet,
die Kommunikationsschnittstelle den ersten Kopplungsbereich, den zweiten Kopplungsbereich und den dritten Arbeitsbereich wechselseitig verbindet und
das dritte Programm über die Kommunikationsschnittstelle von dem ersten Kopplungsbereich durch den zweiten Kopplungsbereich zu dem dritten Arbeitsbereich übertragen wird.

6. Robotersystem, umfassend:
einen Roboter, der einen Roboterarm enthält; und
die Steuerungsvorrichtung nach Anspruch 1, die eine Bewegung des Roboters steuert.

## Revendications

1. Appareil de commande comprenant :
une première carte comportant une première unité de mémoire contenant une première zone de travail et une première zone d'accouplement et une première unité de traitement exécutant un premier programme stocké dans la première zone de travail ;
une deuxième carte comportant une deuxième unité de mémoire contenant une deuxième zone de travail et une deuxième unité de traitement exécutant un deuxième programme stocké dans la deuxième zone de travail ;
une interface de communication reliant la première zone d'accouplement et la deuxième zone de travail ; et
un support de mémoire stockant un fichier compressé contenant le premier programme et le deuxième programme, dans lequel
le fichier compressé est lu à partir du support de mémoire dans la première zone de travail,
le premier programme contenant dans le fichier compressé est chargé dans la première zone de travail,
le deuxième programme contenu dans le fichier compressé est chargé dans la première zone d'accouplement, et
le deuxième programme est transféré de la première zone d'accouplement vers la deuxième zone de travail via l'interface de communication.

2. Appareil de commande selon la revendication 1, dans lequel
le support de mémoire stocke une signature électronique associée au fichier compressé,
le traitement de certification pour la certification du fichier compressé est effectué sur la base de la signature électronique,
lorsque le fichier compressé est certifié dans le traitement de certification, le premier programme et le deuxième programme sont chargés, et
lorsque le fichier compressé n'est pas certifié dans le traitement de certification, le premier programme et le deuxième programme ne sont pas chargés.

3. Appareil de commande selon la revendication 2, dans lequel
le traitement de certification inclut :
un traitement de génération d'une première valeur de hachage à partir de la signature électronique à l'aide d'une clé publique ;
un traitement de génération d'une deuxième valeur de hachage par exécution d'une fonction de hachage sur le fichier compressé ; et
un traitement de comparaison de la première valeur de hachage et de la deuxième valeur de hachage.

4. Appareil de commande selon la revendication 1, dans lequel
l'interface de communication est une interface PCI-Express (marque déposée).

5. Appareil de commande selon la revendication 1, comprenant en outre une troisième carte comportant une troisième unité de mémoire contenant une troisième zone de travail et une troisième unité de traitement exécutant un troisième programme stocké dans la troisième zone de travail, dans lequel
la deuxième unité de mémoire contient en outre une deuxième zone d'accouplement,
l'interface de communication relie mutuellement la première zone d'accouplement, la deuxième zone d'accouplement et la troisième zone de travail, et
le troisième programme est transféré à partir de la première zone d'accouplement par le biais de la deuxième zone d'accouplement vers la troisième zone de travail via l'interface de communication.

6. Système de robot comprenant :
un robot incluant un bras de robot ; et
l'appareil de commande selon la revendication 1, commandant un mouvement du robot.
